# EUROPEAN PATENT APPLICATION

(11) **EP 4 734 596 A1**
(43) Date of publication of application: **29.04.2026**
(21) Application number: 24208779.9
(22) Date of filing: 24.10.2024
(51) Int. Cl.: H04W 24/06, H04W 76/50

(54) **PERFORMING A TEST OF AN IN-VEHICLE SYSTEM ENTITY OR FUNCTIONALITY OF A VEHICLE**

(71) Applicant: Deutsche Telekom AG, 53113 Bonn (DE)
(72) Inventor: BÜCHTER, Martin, 53840 Troisdorf (DE); LAUSTER, Reinhard, 3100 St. Pölten (AT)
(74) Representative: Schwöbel, Thilo K.

(57) **Abstract**

The invention relates to a method for performing a test of an in-vehicle system entity or functionality of a vehicle using a back-end server, wherein the in-vehicle system entity or functionality is used with a mobile communication network, at least one mobile communication device of another vehicle being connected to the mobile communication network, wherein the mobile communication network comprises an access network, a core network, and a plurality of base station entities, and the mobile communication network comprising or being associated with at least one public safety answering point and/or test functionality, wherein the at least one mobile communication device is an operative mobile communication device, being used operatively with the mobile communication network,
wherein at least one test mobile communication device, being part of or assigned to the in-vehicle system entity or functionality, is simultaneously connected to the mobile communication network, the at least one test mobile communication device, being used - with at least a part of the mobile communication network - for performing the test of the in-vehicle system entity or functionality in view of handling emergency calls as IP multimedia subsystem based packet switched emergency calls and/or session initiation protocol based packet switched emergency calls,
wherein, in view of performing a specific emergency test call in order to test the in-vehicle system entity or functionality, the method comprises the following steps:
-- in a first step, the test mobile communication device transmits at least a first test session request message to the back-end server, and receives at least a first test session response message from the back-end server, wherein the communication between the test mobile communication device and the back-end server involves the transmission, by the test mobile communication device, of a specific content of the specific emergency test call to the back-end server,
-- in a second step, subsequent to the first step, the specific emergency test call, or its specific content, is received by the public safety answering point and/or test functionality and handled according to regulatory requirements.

## Description

### BACKGROUND

The present invention relates to a method for performing a test of an in-vehicle system entity or functionality of a vehicle using a back-end server, wherein the in-vehicle system entity or functionality is used with a mobile communication network.

Furthermore, the present invention relates to a back-end server for facilitating a test of an in-vehicle system entity or functionality of a vehicle.

Additionally, the present invention relates to a test mobile communication device system for performing a test of an in-vehicle system entity or functionality of a vehicle using a back-end server.

Furthermore, the present invention relates to a system or mobile communication network for performing a test of an in-vehicle system entity or functionality of a vehicle and using a back-end server.

Furthermore, the present invention relates to a program and to a computer-readable medium for performing a test of an in-vehicle system entity or functionality of a vehicle according to the inventive method.

In order to conduct vehicle homologation, conformance or drive tests - e.g. of in-vehicle system entities or functionalities - involving aspects involving telecommunications like, e.g., eCall crash tests, there are a number of challenges, especially in case that such tests are to be made abroad, this ranging from technical and regulatory requirements to logistical issues, especially in case that universal integrated circuit cards or SIM (subscriber identity module) cards are used that are assigned to a home public land mobile network in a different country than the one where the homologation tests are performed; e.g. different local network configurations as well as unpredictable implementations of transit network infrastructures might heavily impact the functionality and reliability of such tests being performed abroad. Thus, reliable remote tests that would be independent from the connection paths are not guaranteed. Especially, it is uncertain that all involved networks offer the required functionalities and security against espionage or foreign interference. In addition to that, it might be the case that some manufacturers of test-equipment refuse to export their solutions or products to a specific country or a plurality of specific countries; this results in the impossibility to perform the homologation test in such a country, and, hence, the whole vehicle needs to be shipped which has the drawbacks of entailing substantial financial costs and/or extended lead times.

### SUMMARY

An object of the present invention is to provide a technically simple, effective and especially cost effective and secure solution for performing a test of an in-vehicle system entity or functionality of a vehicle in a cost-effective manner and such that testing is able to be realized easily at different locations, and with a minimum risk of false routing of the involved test calls.

The object of the present invention is achieved by a method for performing a test of an in-vehicle system entity or functionality of a vehicle using a back-end server, wherein the in-vehicle system entity or functionality is used with a mobile communication network, at least one mobile communication device of another vehicle being connected to the mobile communication network, wherein the mobile communication network comprises an access network, a core network, and a plurality of base station entities, and the mobile communication network comprising or being associated with at least one public safety answering point and/or test functionality, wherein the at least one mobile communication device is an operative mobile communication device, being used operatively with the mobile communication network,
wherein at least one test mobile communication device, being part of or assigned to the in-vehicle system entity or functionality, is simultaneously connected to the mobile communication network, the at least one test mobile communication device, being used - with at least a part of the mobile communication network - for performing the test of the in-vehicle system entity or functionality in view of handling emergency calls as IP multimedia subsystem based packet switched emergency calls and/or session initiation protocol based packet switched emergency calls,
wherein, in view of performing a specific emergency test call in order to test the in-vehicle system entity or functionality, the method comprises the following steps:
   -- in a first step, the test mobile communication device transmits at least a first test session request message to the back-end server, and receives at least a first test session response message from the back-end server, wherein the communication between the test mobile communication device and the back-end server involves the transmission, by the test mobile communication device, of a specific content of the specific emergency test call to the back-end server,
   -- in a second step, subsequent to the first step, the specific emergency test call, or its specific content, is received by the public safety answering point and/or test functionality and handled according to regulatory requirements.

It is thereby advantageously possible according to the present invention to provide for a secure and reliable remote testing for in-vehicle system entities or functionalities, especially by means of enhancing the reliability and the security through an application layer communication, especially application programming interface (API)-driven communication, and robust metadata management deploying the application layer protocol communication.

Especially, according to the present invention, it is advantageously possible to provide for a solution that is independent of both manufacturers of in-vehicle systems and manufacturers of cars; especially, the present invention provides the possibility for realizes home network operator control. Especially, it is advantageously possible, according to the present invention, that automobile manufacturers are able to conduct reliable remote tests, e.g. of in-vehicle system systems or in-vehicle system entities or functionalities, - especially homologation tests, including homologation, conformance, drive or quality assurance tests.

Additionally, it is advantageously possible, according to the present invention, that the application layer communication ensures compliance with regulations - especially European Union regulations -, and reduces costs and lead times, and overcomes the above mentioned impossibility to perform homologation tests in certain countries and/or the need to ship vehicles for performing such tests and the associated drawbacks.

According to the present invention, it is especially advantageously possible to enhance test techniques for reliable and secure remote testing and controlling an in-vehicle system entity or functionality or other devices by implementing an application layer protocol to communicate - especially through a specified (application programming interface) API interface (such as an open API) - with an application on the in-vehicle system entity or functionality or other device. It includes but is not limited to control messages to trigger actions, such as parameter setup, initiating eCalls or test calls and resending minimum sets of data (MSDs). Additionally, these data can incorporate metadata to distinguish between test calls and non-test calls, e.g. actual (or real) emergency calls.
Especially according to the present invention, such an application programming interface or, or towards a back-end-server can be exposed and used by third party end-points - e.g., public safety answering points, car manufacturers, and/or test centers.

A major advantage is that in this architecture, a back-end-server is able to be part of the home operator network, i.e. of the network corresponding to the home network (or home public land mobile network) of the SIM card (or universal integrated circuit card) used as part of the test mobile communication device and/or as part of the mobile communication device that is operatively used. Thus, the back-end server is able to be used as a unique control point which can leverage in communication with especially in-vehicle system entities or functionalities additionally subscriber-based parameters for addressing, routing and security. Consequently and advantageously, these procedures can be independent of local, visited or transit network features (i.e. in a country where a test is actually conducted) and, also, of car manufacturers. This advantageously enables, e.g., hiding of data and/or enhancing the privacy of data exchanged and/or the usage of abstract addressing of the in-vehicle system entity or functionality.

According to the present invention, a method for performing a test of an in-vehicle system entity or functionality (of a vehicle) is proposed, especially by means of performing emergency test calls. In addition, the present invention also proposes a method for performing operative calls, especially operative emergency calls. For both such purposes, one and the same mobile communication network is used, i.e. the mobile communication network is especially connected to an in-vehicle system entity or functionality (being used with a mobile communication network) as well as to at least one mobile communication device of another vehicle (also being connected to the mobile communication network). As it is conventionally known, the mobile communication network comprises an access network, a core network, and a plurality of base station entities, and the mobile communication network comprises or is associated with at least one public safety answering point and/or test functionality. According to the present invention, the at least one mobile communication device is an operative mobile communication device, being used operatively with the mobile communication network, wherein at least one test mobile communication device - being part of or assigned to the in-vehicle system entity or functionality (to be tested) - is simultaneously connected to the mobile communication network (i.e. simultaneously to the mobile communication device of the other vehicle being connected to the mobile communication network). According to the present invention, the at least one test mobile communication device is used - with at least a part of the mobile communication network - for performing the test of the in-vehicle system entity or functionality in view of handling emergency calls as IP multimedia subsystem based packet switched emergency calls and/or session initiation protocol based packet switched emergency calls. Additionally - or alternatively - according to the present invention, the at least one (operatively used) mobile communication device might be used - with at least a part of the mobile communication network - for operationally performing, or handling calls, especially emergency calls, as IP multimedia subsystem based packet switched emergency calls and/or session initiation protocol based packet switched emergency calls.
According to an important aspect of the present invention, in both the method for performing the test of the in-vehicle system entity or functionality (of a vehicle) as well as in the method for performing operative calls, especially operative emergency calls, a back-end server is used, wherein, in view of performing a specific emergency test call in order to test the in-vehicle system entity or functionality and/or in view of using the (operatively used) mobile communication device for operationally performing, or handling calls, especially emergency calls, the method comprises the following steps:
-- in a first step, the test mobile communication device transmits at least a first test session request message (and/or the mobile communication device transmits at least a first session request message) to the back-end server, and receives at least a first test session response message (and/or a first session response message) from the back-end server, wherein the communication between the test mobile communication device and the back-end server involves the transmission, by the test mobile communication device, of a specific content of the specific emergency test call to the back-end server (and/or wherein the communication between the operative mobile communication device and the back-end server involves the transmission, by the operative mobile communication device, of a specific content of the specific emergency call to the back-end server),
-- in a second step, , the specific emergency test call, or its specific content, is received by the public safety answering point and/or test functionality and handled according to regulatory requirements (and/or the specific emergency call, or its specific content, is received by the public safety answering point and/or test functionality and handled according to regulatory requirements).

According to a preferred embodiment of the present invention, at least one test mobile communication device is assigned to a home mobile communication network being different from the mobile communication network, wherein the mobile communication network is used as visited mobile communication network, wherein especially the back-end server is part of or associated with the home mobile communication network of the at least one test mobile communication device.

Thereby, it is advantageously possible according to the present invention to easily and efficiently realize the benefits of the present invention.

According to the present invention it is furthermore preferred that the operative mobile communication device transmits, in view of performing a specific emergency call, at least a first session request message to the back-end server, and receives at least a first session response message from the back-end server, wherein the communication between the operative mobile communication device and the back-end server involves the transmission, by the operative mobile communication device, of a specific content of the specific emergency call to the back-end server,
wherein especially and subsequently the specific emergency call, or its specific content, is received by the public safety answering point and/or test functionality and handled according to regulatory requirements.

It is thereby advantageously possible to not only perform emergency test calls (using the test mobile communication device) and operatively use the mobile communication network with the operative mobile communication device, but also to perform a specific emergency call using the operative mobile communication device.

According to the present invention it is furthermore preferred that the communication between the back-end server and either the test mobile communication device or the operative mobile communication device uses an application layer protocol, especially a specified application programming interface, especially one conforming but not limited to the OpenAPI specification, OAS.

According to the present invention it is furthermore preferred that the communication between the back-end server and either the test mobile communication device or the operative mobile communication device involves the transmission of metadata to distinguish between emergency test calls and operative emergency calls, wherein especially the metadata are part of the specific content of the specific emergency test call and/or the specific content of the specific emergency call.

According to a further preferred embodiment of the present invention, the communication between the back-end server and either the test mobile communication device or the operative mobile communication device is performed between an application of or related to the test mobile communication device or the operative mobile communication device.

According to a further preferred embodiment of the present invention, the communication between the back-end server and either the test mobile communication device or the operative mobile communication device is performed between the back-end server and either the test mobile communication device or the operative mobile communication device, especially a SIM application thereof.

It is thereby advantageously possible to easily and efficiently implement the present invention.

According to still a further preferred embodiment of the present invention, at least one test session response message from the back-end server to the test mobile communication device and/or at least one session response message from the back-end server to the operative mobile communication device triggers at least one out of the following:
-- a resending and/or an update of a minimum set of data information of the operative mobile communication device and/or of the test mobile communication device,
-- a functionality of the other vehicle of the operative mobile communication device and/or a functionality of the vehicle of the test mobile communication device, especially triggering the activation of an actuator of the other vehicle or the vehicle, especially involving lighting equipment of the other vehicle or the vehicle and/or opening of doors,
-- a re-establishment of an emergency test call of the test mobile communication device and/or a re-establishment of an emergency call of the operative mobile communication device, especially including the transmission of a minimum set of data.

According to a further preferred embodiment of the present invention, the communication using the application layer protocol between the back-end server and either the test mobile communication device or the operative mobile communication device is established in parallel to - and especially as a result of - an emergency call or an emergency test call, being, or comprising, a voice channel and, especially, being an IP multimedia subsystem based packet switched call and/or a session initiation protocol based packet switched call.

According to still a further embodiment of the present invention, the communication using the application layer protocol between the back-end server and either the test mobile communication device or the operative mobile communication device encapsulates, or transports, an emergency call or an emergency test call, being, or comprising, at least a voice and/or a video channel and, especially, being an IP multimedia subsystem based packet switched call and/or a session initiation protocol based packet switched call.

Furthermore, the present invention relates to a back-end server for performing a test of an in-vehicle system entity or functionality of a vehicle, wherein the back-end server is configured to be used with a mobile communication network in a manner such that at least one mobile communication device of another vehicle is connected to the mobile communication network, the mobile communication network comprising an access network, a core network, and a plurality of base station entities, and the mobile communication network comprising or being associated with at least one public safety answering point and/or test functionality, the at least one mobile communication device being an operative mobile communication device, being used operatively with the mobile communication network,
wherein the back-end server is furthermore configured to be used with at least one test mobile communication device, being part of or assigned to the in-vehicle system entity or functionality, the at least one test mobile communication device being simultaneously connected to the mobile communication network and being used - with at least a part of the mobile communication network - for performing the test of the in-vehicle system entity or functionality in view of handling emergency calls as IP multimedia subsystem based packet switched emergency calls and/or session initiation protocol based packet switched emergency calls,
wherein, in view of performing a specific emergency test call in order to test the in-vehicle system entity or functionality, the back-end server is configured such that:
   -- the back-end server receives at least a first test session request message from the test mobile communication device, and transmits at least a first test session response message to the test mobile communication device, wherein the communication between the test mobile communication device and the back-end server involves the reception, by the back-end server, of a specific content of the specific emergency test call from the test mobile communication device,
   -- the specific emergency test call, or its specific content, is received by the public safety answering point and/or test functionality and handled according to regulatory requirements.

Furthermore, the present invention relates to a test mobile communication device for performing a test of an in-vehicle system entity or functionality of a vehicle using a back-end server, wherein the test mobile communication device is configured to be used with a mobile communication network in a manner such that at least one mobile communication device of another vehicle being connected to the mobile communication network, the mobile communication network comprising an access network, a core network, and a plurality of base station entities, and the mobile communication network comprising or being associated with at least one public safety answering point and/or test functionality, wherein the at least one mobile communication device is an operative mobile communication device, being used operatively with the mobile communication network,
wherein at least one test mobile communication device, being part of or assigned to the in-vehicle system entity or functionality, is simultaneously connected to the mobile communication network, the at least one test mobile communication device, being used - with at least a part of the mobile communication network - for performing the test of the in-vehicle system entity or functionality in view of handling emergency calls as IP multimedia subsystem based packet switched emergency calls and/or session initiation protocol based packet switched emergency calls,
wherein, in view of performing a specific emergency test call in order to test the in-vehicle system entity or functionality, the test mobile communication device is configured such that:
   -- the test mobile communication device transmits at least a first test session request message to the back-end server, and receives at least a first test session response message from the back-end server, wherein the communication between the test mobile communication device and the back-end server involves the transmission, by the test mobile communication device, of a specific content of the specific test emergency call to the back-end server,
   -- the specific test emergency call, or its specific content, is received by the public safety answering point and/or test functionality and handled according to regulatory requirements.

Furthermore, the present invention relates to a system or to a mobile communication network for performing a test of an in-vehicle system entity or functionality of a vehicle using a back-end server, wherein the mobile communication network is used in a manner such that at least one mobile communication device of another vehicle being connected to the mobile communication network, wherein the mobile communication network comprises an access network, a core network, and a plurality of base station entities, and the mobile communication network comprising or being associated with at least one public safety answering point and/or test functionality, wherein the at least one mobile communication device is an operative mobile communication device, being used operatively with the mobile communication network,
wherein at least one test mobile communication device, being part of or assigned to the in-vehicle system entity or functionality, is simultaneously connected to the mobile communication network, the at least one test mobile communication device, being used - with at least a part of the mobile communication network - for performing the test of the in-vehicle system entity or functionality in view of handling emergency calls as IP multimedia subsystem based packet switched emergency calls and/or session initiation protocol based packet switched emergency calls,
wherein, in view of performing a specific emergency test call in order to test the in-vehicle system entity or functionality, the system or mobile communication network is configured such that:
   -- the test mobile communication device transmits at least a first test session request message to the back-end server, and receives at least a first test session response message from the back-end server, wherein the communication between the test mobile communication device and the back-end server involves the transmission, by the test mobile communication device, of a specific content of the specific test emergency call to the back-end server,
   -- the specific test emergency call, or its specific content, is received by the public safety answering point and/or test functionality and handled according to regulatory requirements.

Additionally, the present invention relates to a program comprising a computer readable program code which, when executed on a computer and/or on a network node of a home mobile communication network and/or on a back-end server and/or on a test or on an operative mobile communication device, especially an application or SIM application of or related to the test or the operative mobile communication device, or in part on the network node of a home mobile communication network and/or in part on a back-end server and/or in part on a test or on an operative mobile communication device, especially an application or SIM application of or related to the test or the operative mobile communication device, causes the network node of the home mobile communication network and/or the back-end server and/or the test or the operative mobile communication device, especially the application or SIM application of or related to the test or the operative mobile communication device, to perform the inventive method.

Still additionally, the present invention relates to a computer-readable medium comprising instructions which when executed on a computer and/or on a network node of a home mobile communication network and/or on a back-end server and/or on a test or on an operative mobile communication device, especially an application or SIM application of or related to the test or the operative mobile communication device, or in part on the network node of a home mobile communication network and/or in part on a back-end server and/or in part on a test or on an operative mobile communication device, especially an application or SIM application of or related to the test or the operative mobile communication device, causes the network node of the home mobile communication network and/or the back-end server and/or the test or the operative mobile communication device, especially the application or SIM application of or related to the test or the operative mobile communication device, to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

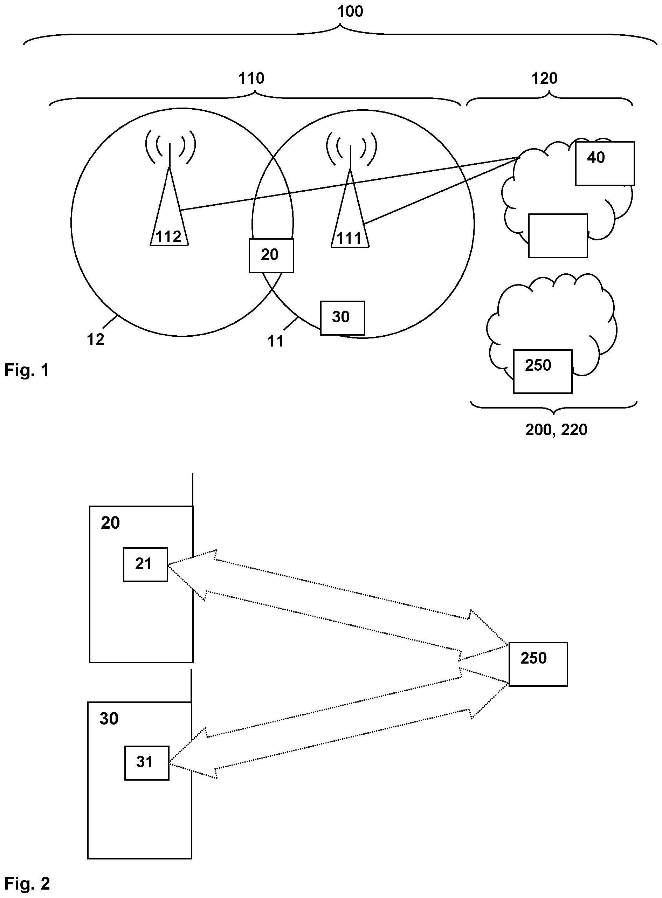

Figure 1 schematically illustrate a visited mobile communication network having a plurality of base station entities and a plurality of mobile communication devices (or user equipments) among which a mobile communication device is an operative mobile communication device (being used operatively with the mobile communication network) and a test mobile communication device (being part of or assigned to the in-vehicle system entity or functionality to be tested); both mobile communication devices are at least able to be simultaneously connected to the mobile communication network, and a home network or home public land mobile network, comprising a base station entity, is also schematically represented.
Figure 2 schematically illustrates the communication between the back-end server and either the test mobile communication device or the operative mobile communication device.
Figure 3 schematically illustrates a communication diagram showing the communication between the in-vehicle system entity or functionality, the base station entity, and the test instance.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a mobile communication network 100, especially a public land mobile network 100, is schematically shown. The mobile communication network 100 - especially being a visited mobile communication network 100 - comprising an access network 110 and a core network 120. In addition, a home network or home public land mobile network 200 is schematically shown in Figure 1. Both the visited mobile communication network 100 and the home mobile communication network 200 are preferably cellular telecommunications networks comprising typically a plurality of network cells (or radio cells). In Figure 1, this is only represented for the visited mobile communication network 100, showing two network cells (or radio cells) by means of reference signs 11 and 12. The visited mobile communication network 100 typically comprises a plurality of user equipments or mobile communication devices. For the sake of simplicity, only two mobile communication devices out of the plurality of user equipments or mobile communication devices are represented and referred to by means of reference signs 20 and 30, wherein reference sign 20 refers to a operative (or operatively used) mobile communication device or user equipment, and reference sign 30 refers to a test mobile communication device. The access network 110 of the visited mobile communication network 100 comprises, in the exemplary representation of Figure 1, a first base station entity 111, serving the (first) radio cell 11. Furthermore, a second base station entity 112, serving the neighbor (second) radio cell 12, is schematically shown. The base station entities 111, 112 are typically base stations, base transceiver stations or base station entities, e.g. a eNodeB or an gNodeB base station.

The home network 200 or home mobile communication network 200 comprises a back-end server 250 being used to perform emergency test calls in order to be able to test the in-vehicle system entity or functionality associated of, or comprising the test mobile communication device 30. By means of its subscriber identity module (SIM card) or universal integrated circuit card, the at least one test mobile communication device 30 is assigned to the home mobile communication network 200 (that is typically different from the mobile communication network 100, and the mobile communication network 100 is used as visited mobile communication network 100.

According to the present invention, it is advantageously possible to perform a test of an in-vehicle system entity or functionality (especially for performing emergency calls). Thus, a test of an emergency call or of an emergency call functionality is able to be conducted using the visited mobile communication network 100 wherein the visited mobile communication network 100 is both used in an operative manner - serving operative mobile communication devices or user equipments 30 -, and for testing purposes - serving test mobile communication devices 20. In order to be able to execute emergency calls or quality management test calls, the visited mobile communication network 100 typically comprises or is associated with a plurality of public safety answering points 40 or a plurality of public safety answering point functionalities 40 or test functionalities 40. Each of such public safety answering points 40 is typically related (or assigned) to a specific part or sub-area of the (total) geographical area served by the visited mobile communication network 100.

According to the present invention, the test of the in-vehicle system entity or functionality of a vehicle is able to be performed using the back-end server 250. The in-vehicle system entity or functionality (to be tested and being associated with the test mobile communication device 30) is used with the (visited) mobile communication network 100, and at least one operative (or operatively used) mobile communication device 20 of another vehicle is also connected to the mobile communication network 100; thus, the at least one test mobile communication device 30 is part of or assigned to the in-vehicle system entity or functionality and is connected simultaneously (i.e. simultaneously to the operatively used mobile communication device 20) to the mobile communication network 100 for performing the test of the in-vehicle system entity or functionality in view of handling emergency calls (especially as IP multimedia subsystem based packet switched emergency calls and/or as session initiation protocol based packet switched emergency calls).
In view of performing a specific emergency test call in order to test the in-vehicle system entity or functionality, the method comprises the following steps:
-- in a first step, the test mobile communication device 30 transmits at least a first test session request message to the back-end server 250, and receives at least a first test session response message from the back-end server 250, wherein the communication between the test mobile communication device 30 and the back-end server 250 involves the transmission, by the test mobile communication device 30, of a specific content of the specific emergency test call to the back-end server 250,
-- in a second step, subsequent to the first step, the specific emergency test call, or its specific content, is received by the public safety answering point and/or test functionality 40 and handled according to regulatory requirements.

Likewise with the operatively used mobile communication device 20, the exchange of session request and session response messages with the back-end server 250 is possible according to the present invention, i.e. the operative mobile communication device 20 transmits, in view of performing a specific (operative) emergency call, at least a first session request message to the back-end server 250, and receives at least a first session response message from the back-end server 250, wherein the communication between the operative mobile communication device 20 and the back-end server 250 involves the transmission, by the operative mobile communication device 20, of a specific content of the specific emergency call to the back-end server 250. Especially (and subsequently), the specific emergency call, or its specific content, is routed to and received by the public safety answering point and/or test functionality 40 and handled according to regulatory requirements.

It is thus advantageously possible - using the communication between the back-end server 250 and either the test mobile communication device 30 or the operative mobile communication device 20 - to use an application layer protocol, especially a specified application programming interface that is at least possible to be distinct from the emergency (test) call. Especially, it is advantageously possible and preferred according to the present invention to use an application programming interface conforming but not limited to the OpenAPI specification, OAS.

Figure 2 schematically illustrates the communication between the back-end server 250 and either the test mobile communication device 30 or the operatively used mobile communication device 20. Especially, Figure 2 shows this communication to use an application layer protocol, especially a specified application programming interface.

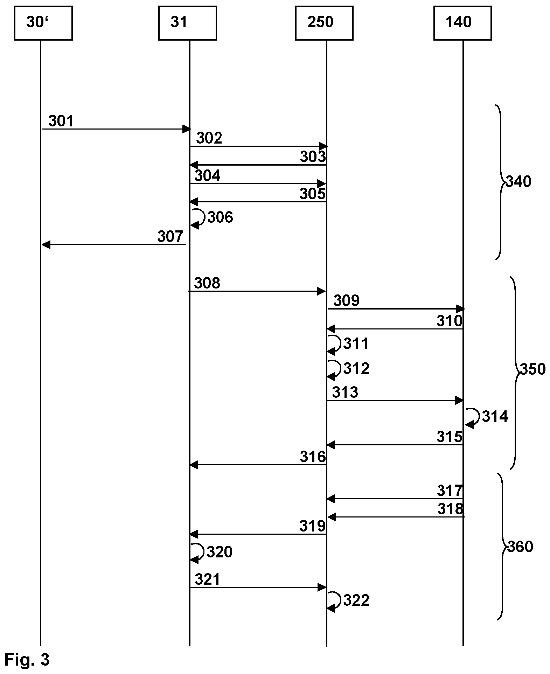

Figure 3 schematically illustrates a communication diagram showing the communication, or the workflow, between the in-vehicle system entity or functionality 31, the back-end server 250, and a test instance 140. The test instance 140 might be a public safety answering point 40 associated with the (visited) mobile communication network 100 (and operatively used by the operatively used mobile communication device 20), or, alternatively, associated with the home mobile communication network 200.

In a first part 340 of the communication, a feasibility check and a check of the security of the connection between the in-vehicle system entity or functionality 31 (or, alternatively, an application or other software module that is running on the in-vehicle system 30) as well as a check of the connection to the back-end server 250 is performed:
In a first processing step 301, the in-vehicle system entity or functionality 31 (or the application or other software module that is running on the in-vehicle system 30) is activated by means of an interaction from the user 30' of the in-vehicle system entity or functionality 31 and/or of the test mobile communication device 30.
In a second processing step 302, the connection (from the in-vehicle system entity or functionality 31 (or the application or other software module that is running on the in-vehicle system 30)) to the base station entity 250 is established.
In a third processing step 303, the establishment of the connection towards the back-end server 250 is confirmed.
In a fourth processing step 304, a test message is sent from the in-vehicle system entity or functionality 31 (or from the application or other software module that is running on the in-vehicle system 30) to the back-end server 250, the test message especially having a predefined content to check feasibility (e.g., latency, bandwidth) and security (e.g., SSL/TLS handshake, authentication); in a fifth processing step 305, the successful receipt thereof is acknowledged by the base station entity 250.
In a sixth processing step 306, the acknowledgement is validated in the in-vehicle system entity or functionality 31 (or the application or other software module that is running on the in-vehicle system 30); if ok, a prompt information is transmitted, in a seventh processing step 307 and especially displayed by means of using a display means, to the user 30' of the in-vehicle system entity or functionality 31 and/or of the test mobile communication device 30 that preconditions for the test session are in place; otherwise, if not ok, it is prompted that preconditions for the Test Session are not in place.

In a second part 350 of the communication, a test session is performed, and the test is handled and controlled:
In an eighth processing step 308, the in-vehicle system entity or functionality 31 (or the application or other software module that is running on the in-vehicle system 30) initiates a test session to the back-end server 250 (or to an optional additional proxy server that is, albeit, not represented in Figure 3) deploying the secure connection establishment.
Especially according to the present invention, the encapsulated emergency test call, as well as, usually, metadata, are connected and transmitted - in a ninth processing step 309 - over the IP multimedia subsystem (IMS) session toward the back-end server 250. The back-end server 250 receives (optionally via a proxy server, that is not represented in Figure 3) the IMS call and initializes - in a tenth processing step 310 and in an eleventh processing step 311 - a session to manage it.
In a twelfth processing step 312, the back-end server 250 extracts metadata from the call setup message (e.g., SIP INVITE) and analyzes the metadata.
If the analysis proves the validity of the emergency test call, the back-end server 250 connects - in a thirteenth processing step 313 - the session to the test instance 140, e.g., test centers or PSAPs.
In a fourteenth processing step 314, the test Instance (or emergency test call, e.g., towards a test public safety answering point) takes over the handling and management of the session.
Additionally, in a fifteenth processing step 315 and in a sixteenth processing step 316, the test instance 140 - especially as a specific functionality - is able, especially via the back-end server 250, to configure the in-vehicle system entity or functionality 31 (or the application or other software module that is running on the in-vehicle system 30), e.g. especially to update and/or to modify settings (such as volume, ringtone, firmware, etc.) of the in-vehicle system entity or functionality 31 (or the application or other software module that is running on the in-vehicle system 30).

In a third part 360 of the communication, the test session (or emergency test call) is terminated:
In a seventeenth processing step 317, the test instance 140 (e.g., test centers or PSAPs) completes the test session (or emergency test call); in an eighteenth processing step 318, the test instance 140 instructs the back-end server 250 to close the connection.
In a nineteenth processing step 319, the back-end server 250 prompts the in-vehicle system entity or functionality 31 (or the application or other software module that is running on the in-vehicle system 30) that the session is to be closed.
In a twentieth processing step 320, the in-vehicle system entity or functionality 31 (or the application or other software module that is running on the in-vehicle system 30) validates the prompt received.
In a twenty-first processing step 321, the in-vehicle system entity or functionality 31 (or the application or other software module that is running on the in-vehicle system 30) sends an acknowledgment upon successful validation to the back-end server 250, and in a twenty-second processing step 322, the back-end server 250 terminates the session.

In general, the back-end server 250 or each involved entity logs the call details for monitoring and auditing purposes. Furthermore, to handle transient failures, timeouts and retry mechanisms may additionally added for each operation.
Especially according to the present invention, all communications are encrypted to allow for data protection and to ensure data integrity and confidentiality.

According to the present invention, especially the following key components are used:
The in-vehicle system entity or functionality 31, or, especially, the (dedicated) application or other software module that is running on the in-vehicle system 30, especially for tests or test purposes:
In case this is realized as an application on the in-vehicle system 30, such an in-vehicle system application 31 is in charge of generating and marking test eCalls implying communication with the back-end server 250. The in-vehicle system application 31 can be remotely configured and controlled by the test center 140 or PSAP which can set parameters of the in-vehicle system 31, request status/data, or trigger the system to initiate a test call or callback thereto.

The back-end server 250 for assessment and routing:
The back-end server 250 is a control point operated by, especially, the home network operator between the dedicated in-vehicle system application 31 (i.e. the in-vehicle system) and the test centers or PSAPs 140. This enables the test centers or PSAPs 140 to control sending/receiving, managing, routing, initiating test eCalls, on the in-vehicle system or in-vehicle system application 31. The back-end-server 250 especially provides a secure connection, especially based on open application interface (APIs) specification and is especially able to communicate to a specific in-vehicle system or in-vehicle system application 31.
Entity / Assignments of the back-end server 250:
-- Control point at the visited or home network operator;
-- Service consumer of IVS services (e.g., send/receives, setup parameter, and manages test call requests);
-- Communicates securely with a specific in-vehicle system or in-vehicle system application 31;
-- Service producer to test centers or PSAPs 140;
-- Provides services in a secure connection-based way on open API specifications;
-- Permits control of the in-vehicle system 31 (or in-vehicle system application 31) by test centers or PSAPs 140;
-- Back-end-server 250 and PSAPs/test centers 140 can subscribe to notifications on state changes of in-vehicle system 31 (e.g., minimum set of data (MSD) update parameter, eCall start/end...).
Alternatively according to the present invention and/or as an option, the communication between the in-vehicle system or in-vehicle system application 31 or subscriber identity module on the one hand, and the back-end-server 250 on the other hand can be done by existing 2G/3G/4G/5G control plane interfaces i.e., NAS (non-access stratum) using existing provisioning mechanism with new updated parameter for IVS control (e.g., over-the-air (OTA), user equipment route selection policy URSP rules).

Application layer protocol:
This is deployed between the in-vehicle system or the in-vehicle system application 31 and the back-end server 250 and is essential to ensure a robust communication, especially using a specific API interface (e.g., open API based) and be capable of precisely encapsulating test eCall data, along with additional control messages to trigger specific actions on the in-vehicle system or in-vehicle system application 31 (e.g., initiate eCall, resend MSD). This over-the-top application communication is independent on SIP communication path and protocol parameters.

Security and Authentication:
According to the present invention, it is advantageously possible - by means of deploying encryption as part of the application layer protocol communication - to ensure robust security measures to authenticate the in-vehicle system or in-vehicle system application 31, the back-end server 250, and any involved gateway server. Thus, it is advantageously possible to ensure that only authorized emergency test calls are handled and, also, to realize data protection and data integrity and confidentiality. Corresponding mechanisms may include at least one out of the following:
-- mutual TLS (Transport Layer Security) for server and client authentication;
-- OAuth 2.0 for secure API access and token-based authentication;
-- Digital signatures to verify the authenticity of the messages exchanged.

Hence, according to the present invention, a service-based architecture including in-vehicle system 31, a backend server 250 (or a plurality thereof), and PSAPs/test centers 140 that is independent of roaming scenarios and network/country borders. Especially, API-based interfaces and protocols are used, allowing comparisons from 3GPP "legacy" IMS (SIP) call control path to new flexible functionality.
Especially, eCall E2E routing and service enabling are independent of IMS/SIP network and protocol modifications/extensions. Such changes complicate and make integration expensive for every network operator involved in service delivery.
Advantageously, access control of stakeholders (i.e., IVS, PSAP, Test centers) is provided by standardized service-based interface/APIs.
Furthermore, scenarios are especially under the control of the home operator (IVS subscription).
Additionally, it is advantageously possible to provide for an abstraction and hiding of subscriber data used in the in-vehicle system or the in-vehicle system application 31.

## Claims

1. Method for performing a test of an in-vehicle system entity or functionality (31) of a vehicle using a back-end server (250), wherein the in-vehicle system entity or functionality (31) is used with a mobile communication network (100), at least one mobile communication device (20) of another vehicle being connected to the mobile communication network (100), wherein the mobile communication network (100) comprises an access network (110), a core network (120), and a plurality of base station entities (111, 112), and the mobile communication network (100) comprising or being associated with at least one public safety answering point and/or test functionality (40), wherein the at least one mobile communication device (20) is an operative mobile communication device (20), being used operatively with the mobile communication network (100),
wherein at least one test mobile communication device (30), being part of or assigned to the in-vehicle system entity or functionality (31), is simultaneously connected to the mobile communication network (100), the at least one test mobile communication device (30), being used - with at least a part of the mobile communication network (100) - for performing the test of the in-vehicle system entity or functionality (31) in view of handling emergency calls as IP multimedia subsystem based packet switched emergency calls and/or session initiation protocol based packet switched emergency calls,
wherein, in view of performing a specific emergency test call in order to test the in-vehicle system entity or functionality (31), the method comprises the following steps:
-- in a first step, the test mobile communication device (30) transmits at least a first test session request message to the back-end server (250), and receives at least a first test session response message from the back-end server (250), wherein the communication between the test mobile communication device (30) and the back-end server (250) involves the transmission, by the test mobile communication device (30), of a specific content of the specific emergency test call to the back-end server (250),
-- in a second step, subsequent to the first step, the specific emergency test call, or its specific content, is received by the public safety answering point and/or test functionality (40) and handled according to regulatory requirements.

2. Method according to claim 1, wherein at least one test mobile communication device (30) is assigned to a home mobile communication network (200) being different from the mobile communication network (100), wherein the mobile communication network (100) is used as visited mobile communication network (100),
wherein especially the back-end server (250) is part of or associated with the home mobile communication network (200) of the at least one test mobile communication device (30).

3. Method according to one of the preceding claims, wherein the operative mobile communication device (20) transmits, in view of performing a specific emergency call, at least a first session request message to the back-end server (250), and receives at least a first session response message from the back-end server (250), wherein the communication between the operative mobile communication device (20) and the back-end server (250) involves the transmission, by the operative mobile communication device (20), of a specific content of the specific emergency call to the back-end server (250),
wherein especially and subsequently the specific emergency call, or its specific content, is received by the public safety answering point and/or test functionality (40) and handled according to regulatory requirements.

4. Method according to one of the preceding claims, wherein the communication between the back-end server (250) and either the test mobile communication device (30) or the operative mobile communication device (20) uses an application layer protocol, especially a specified application programming interface, especially one conforming but not limited to the OpenAPI specification, OAS.

5. Method according to one of the preceding claims, wherein the communication between the back-end server (250) and either the test mobile communication device (30) or the operative mobile communication device (20) involves the transmission of metadata to distinguish between emergency test calls and operative emergency calls, wherein especially the metadata are part of the specific content of the specific emergency test call and/or the specific content of the specific emergency call.

6. Method according to one of the preceding claims, wherein the communication between the back-end server (250) and either the test mobile communication device (30) or the operative mobile communication device (20) is performed between an application (21, 31) of or related to the test mobile communication device (30) or the operative mobile communication device (20).

7. Method according to one of the preceding claims, wherein the communication between the back-end server (250) and either the test mobile communication device (30) or the operative mobile communication device (20) is performed between the back-end server (250) and either the test mobile communication device (30) or the operative mobile communication device (20), especially a SIM application (21, 31) thereof.

8. Method according to one of the preceding claims, wherein at least one test session response message from the back-end server (250) to the test mobile communication device (30) and/or at least one session response message from the back-end server (250) to the operative mobile communication device (20) triggers at least one out of the following:
-- a resending and/or an update of a minimum set of data information of the operative mobile communication device (20) and/or of the test mobile communication device (30),
-- a functionality of the other vehicle of the operative mobile communication device (20) and/or a functionality of the vehicle of the test mobile communication device (30), especially triggering the activation of an actuator of the other vehicle or the vehicle, especially involving lighting equipment of the other vehicle or the vehicle and/or opening of doors,
-- a re-establishment of an emergency test call of the test mobile communication device (30) and/or a re-establishment of an emergency call of the operative mobile communication device (20), especially including the transmission of a minimum set of data.

9. Method according to one of the preceding claims, wherein the communication using the application layer protocol between the back-end server (250) and either the test mobile communication device (30) or the operative mobile communication device (20) is established in parallel to - and especially as a result of - an emergency call or an emergency test call, being, or comprising, a voice channel and, especially, being an IP multimedia subsystem based packet switched call and/or a session initiation protocol based packet switched call.

10. Method according to one of the preceding claims, wherein the communication using the application layer protocol between the back-end server (250) and either the test mobile communication device (30) or the operative mobile communication device (20) encapsulates, or transports, an emergency call or an emergency test call, being, or comprising, a voice channel and, especially, being an IP multimedia subsystem based packet switched call and/or a session initiation protocol based packet switched call.

11. Back-end server (250) for performing a test of an in-vehicle system entity or functionality (31) of a vehicle, wherein the back-end server (250) is configured to be used with a mobile communication network (100) in a manner such that at least one mobile communication device (20) of another vehicle is connected to the mobile communication network (100), the mobile communication network (100) comprising an access network (110), a core network (120), and a plurality of base station entities (111, 112), and the mobile communication network (100) comprising or being associated with at least one public safety answering point and/or test functionality (40), the at least one mobile communication device (20) being an operative mobile communication device (20), being used operatively with the mobile communication network (100),
wherein the back-end server (250) is furthermore configured to be used with at least one test mobile communication device (30), being part of or assigned to the in-vehicle system entity or functionality (31), the at least one test mobile communication device (30) being simultaneously connected to the mobile communication network (100) and being used - with at least a part of the mobile communication network (100) - for performing the test of the in-vehicle system entity or functionality (31) in view of handling emergency calls as IP multimedia subsystem based packet switched emergency calls and/or session initiation protocol based packet switched emergency calls,
wherein, in view of performing a specific emergency test call in order to test the in-vehicle system entity or functionality (31), the back-end server (250) is configured such that:
-- the back-end server (250) receives at least a first test session request message from the test mobile communication device (30), and transmits at least a first test session response message to the test mobile communication device (30), wherein the communication between the test mobile communication device (30) and the back-end server (250) involves the reception, by the back-end server (250), of a specific content of the specific emergency test call from the test mobile communication device (30),
-- the specific emergency test call, or its specific content, is received by the public safety answering point and/or test functionality (40) and handled according to regulatory requirements.

12. Test mobile communication device (30) for performing a test of an in-vehicle system entity or functionality (31) of a vehicle using a back-end server (250), wherein the test mobile communication device (30) is configured to be used with a mobile communication network (100) in a manner such that at least one mobile communication device (20) of another vehicle being connected to the mobile communication network (100), the mobile communication network (100) comprising an access network (110), a core network (120), and a plurality of base station entities (111, 112), and the mobile communication network (100) comprising or being associated with at least one public safety answering point and/or test functionality (40), wherein the at least one mobile communication device (20) is an operative mobile communication device (20), being used operatively with the mobile communication network (100),
wherein at least one test mobile communication device (30), being part of or assigned to the in-vehicle system entity or functionality (31), is simultaneously connected to the mobile communication network (100), the at least one test mobile communication device (30), being used - with at least a part of the mobile communication network (100) - for performing the test of the in-vehicle system entity or functionality (31) in view of handling emergency calls as IP multimedia subsystem based packet switched emergency calls and/or session initiation protocol based packet switched emergency calls,
wherein, in view of performing a specific emergency test call in order to test the in-vehicle system entity or functionality (31), the test mobile communication device (30) is configured such that:
-- the test mobile communication device (30) transmits at least a first test session request message to the back-end server (250), and receives at least a first test session response message from the back-end server (250), wherein the communication between the test mobile communication device (30) and the back-end server (250) involves the transmission, by the test mobile communication device (30), of a specific content of the specific test emergency call to the back-end server (250),
-- the specific test emergency call, or its specific content, is received by the public safety answering point and/or test functionality (40) and handled according to regulatory requirements.

13. System or mobile communication network (100) for performing a test of an in-vehicle system entity or functionality (31) of a vehicle using a back-end server (250), wherein the mobile communication network (100) is used in a manner such that at least one mobile communication device (20) of another vehicle being connected to the mobile communication network (100), wherein the mobile communication network (100) comprises an access network (110), a core network (120), and a plurality of base station entities (111, 112), and the mobile communication network (100) comprising or being associated with at least one public safety answering point and/or test functionality (40), wherein the at least one mobile communication device (20) is an operative mobile communication device (20), being used operatively with the mobile communication network (100), wherein at least one test mobile communication device (30), being part of or assigned to the in-vehicle system entity or functionality (31), is simultaneously connected to the mobile communication network (100), the at least one test mobile communication device (30), being used - with at least a part of the mobile communication network (100) - for performing the test of the in-vehicle system entity or functionality (31) in view of handling emergency calls as IP multimedia subsystem based packet switched emergency calls and/or session initiation protocol based packet switched emergency calls,
wherein, in view of performing a specific emergency test call in order to test the in-vehicle system entity or functionality (31), the system or mobile communication network (100) is configured such that:
-- the test mobile communication device (30) transmits at least a first test session request message to the back-end server (250), and receives at least a first test session response message from the back-end server (250), wherein the communication between the test mobile communication device (30) and the back-end server (250) involves the transmission, by the test mobile communication device (30), of a specific content of the specific test emergency call to the back-end server (250),
-- the specific test emergency call, or its specific content, is received by the public safety answering point and/or test functionality (40) and handled according to regulatory requirements.

14. Program comprising a computer readable program code which, when executed on a computer and/or on a network node of a home mobile communication network (200) and/or on a back-end server (250) and/or on a test or on an operative mobile communication device (20, 30), especially an application or SIM application of or related to the test or the operative mobile communication device (20, 30), or in part on the network node of a home mobile communication network (200) and/or in part on a back-end server (250) and/or in part on a test or on an operative mobile communication device (20, 30), especially an application or SIM application of or related to the test or the operative mobile communication device (20, 30), causes the network node of the home mobile communication network (200) and/or the back-end server (250) and/or the test or the operative mobile communication device (20, 30), especially the application or SIM application of or related to the test or the operative mobile communication device (20, 30), to perform a method according one of claims 1 to 10.

15. Computer-readable medium comprising instructions which when executed on a computer and/or on a network node of a home mobile communication network (200) and/or on a back-end server (250) and/or on a test or on an operative mobile communication device (20, 30), especially an application or SIM application of or related to the test or the operative mobile communication device (20, 30), or in part on the network node of a home mobile communication network (200) and/or in part on a back-end server (250) and/or in part on a test or on an operative mobile communication device (20, 30), especially an application or SIM application of or related to the test mobile communication device (30), causes the network node of the home mobile communication network (200) and/or the back-end server (250) and/or the test or the operative mobile communication device (20, 30), especially the application or SIM application of or related to the test or the operative mobile communication device (20, 30), to perform a method according one of claims 1 to 10.
